# EUROPÄISCHE PATENTSCHRIFT

(11) **EP 1 023 632 B1**
(45) Veröffentlichungstag und Bekanntmachung des Hinweises auf die Patenterteilung: **05.12.2001**
(21) Anmeldenummer: 98950097.0
(22) Anmeldetag: 30.09.1998
(51) Int. Cl.: G02F 1/135, H04J 14/02

(54) **VERFAHREN UND VORRICHTUNG ZUM SPEKTRALEN PEGELABGLEICH IN WDM VIELKANALSYSTEMEN**
METHOD AND DEVICE FOR SPECTRAL LEVELLING IN WDB MULTI-CHANNEL SYSTEMS
PROCEDE ET DISPOSITIF D'AJUSTEMENT SPECTRAL DE NIVEAU DANS DES SYSTEMES MULTIPLEX DE MULTIPLEXAGE PAR REPARTITION EN LONGUEUR D'ONDES

(30) Priorität: 14.10.1997 DE 19745323
(43) Veröffentlichungstag der Anmeldung: 02.08.2000
(73) Patentinhaber: Deutsche Telekom AG, 53113 Bonn (DE)
(72) Erfinder: DULTZ, Wolfgang, D-65396 Frankfurt (DE); BERESNEV, Leonid, Columbia, MD 21044 (US); RIES, Reinald, D-64298 Darmstadt (DE)
(86) Internationale Anmeldenummer: EP9806208
(87) Internationale Veröffentlichungsnummer: WO9919768

(56) Entgegenhaltungen:
- EP-A- 0 715 191
- US-A- 5 363 221
- PARKER M C ET AL: "DYNAMIC HOLOGRAPHIC SPECTRAL EQUALIZATION FOR WDM" IEEE PHOTONICS TECHNOLOGY LETTERS, Bd. 9, Nr. 4, April 1997, Seiten 529-531, XP000690483
- GUENA M ET AL: "120 X 100 PIXEL ANTIBLOOMING ARRAY BASED ON OPTICALLY ADDRESSED FERROELECTRIC LIQUID-CRYSTAL CELLS" OPTICS LETTERS, Bd. 19, Nr. 13, 1. Juli 1994, Seiten 1001-1003, XP000454706
- Y.-C. LIU ET AL.: "INGAAS PHOTODIODES FOR INFRARED-SENSITIVE OPTICALLY ADDRESSED SPATIAL LIGHT MODULATORS" SPATIAL LIGHT MODULATORS; TOPICAL MEETING, INCLINE VILLAGE, USA; OSA TRENDS IN OPTICS AND PHOTONICS SERIES, Bd. 14, 17. März 1997, Seiten 138-140, XP002091027

## Beschreibung

Die Erfindung betrifft ein Verfahren und eine Vorrichtung zum spektralen Pegelabgleich in WDM Vielkanalsystemen, wie sie z. B. in H. HULTZSCH; Optische Telekommunikationssysteme; Gelsenkirchen 1996, Seite 344 ff beschrieben sind.

WDM Vielkanalsysteme verwenden eine größere Zahl gleichabständiger spektraler Kanäle zur optischen Übertragung im Glasfasernetz. Durch die Parallelübertragung wird die Übertragungskapazität erhöht, ohne daß die Übertragungsfrequenzen heraufgesetzt werden müssen, d. h., ein 2,5 GBit System kann ohne Änderung der elektronischen Komponenten bei 20 Kanälen für die Übertragung von 50 GBit genutzt werden.

WDM-Systeme arbeiten im allgemeinen im dritten optischen Fenster der Telekommunikation bei 1550 nm, wo es geeignete optische Verstärker gibt, die das gesamte Vielkanalsystem, Kanal für Kanal, verstärken können. Zwar unterscheidet der Verstärker nicht grundsätzlich zwischen einzelnen Kanälen, doch ist die Verstärkungskurve V (λ) von der spektralen Lage des einzelnen Kanals abhängig. Falls für größere Strecken eine Anzahl N von Verstärkern benötigt wird, potenziert sich die Verstärkung V^{N}(λ), was selbst bei einer bescheidenen Wellenlängenabhängigkeit V(λ)·I(λ) zu erheblichen Abhängigkeiten der Intensität V^{N}(λ) · Iₒ(λ) am Ende der Übertragungsstrecke führen kann. Sind diese nicht mehr tolerabel, müssen geeignete Filter für eine gleichmäßige spektrale Abhängigkeit von V^{N}(λ)Iₒ(λ) sorgen. Iₒ(λ) ist die Intensität des Kanals der Wellenlänge λ am Eingang der Verstärkerkette.

Für den spektralen Abgleich liegt es nahe, mit Farbglasfiltern oder Interferenzfiltern der Durchlässigkeit D(λ) die Kanalintensitäten D(λ) ·V^{N} (λ) Iₒ (λ) am Ausgang zu nivellieren. Diese Filter arbeiten völlig analog einem Anpassungsfilter für die Farbtemperatur der Lichtquelle an einen photographischen Film. Ihre reziproke Charakteristik senkt die Intensität der intensiven spektralen Kanäle auf die der schwachen. Das geht beim photographischen Film, nicht jedoch bei einem WDM Vielkanalsystem, da die Kurven V(λ) von Verstärker zu Verstärker stark voneinander abweichen und außerdem zeitabhängig sind. Eigentlich wird die Intensität I_{A}(λ) am Ausgang des WDM Übertragungssystem also durch 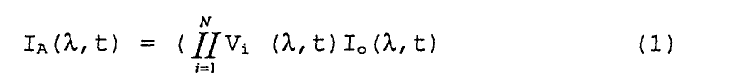 beschrieben. Eine solche Charakteristik läßt sich nicht durch ein einziges statisches Filter ausgleichen. Selbst bei geringer Zeitabhängigkeit macht die starke Abhängigkeit der Verstärkungskurve Vᵢ(λ) vom Verstärker i und die Abhängigkeit von I_{A} von der Zahl der Verstärker N die Entwicklung eines einheitlichen Pegelabgleichfilters sehr schwierig. Andere kanalabhängige Dispersions- und Dämpfungseffekte, wie die Polarisationsmodendispersion, verstärken dieses Problem.

So werden zur Abstimmung der spektralen Filter für WDM Übertragungen z. B. in DE 4327 103 A1 und DE 4326 522 A1 Mehrstrahlinterferenzen von vielen parallelen Wellenleitern mit individueller Phasensteuerung vorgeschlagen. Diese Filter müssen aktiv elektronisch moduliert werden. Das gilt auch für elektro-optisch modulierbare Filter auf der Basis nichtlinearer optischer Materialien, die ortsabhängig strukturiert sind, wie sie in DE 31 48 427 A1 beschrieben sind.

Dies gilt auch für die in Parker et al., Dynamic Holographic Spectral Equalisazion for WDM, in der eine Vorrichtung zum spektralen Pegelabgleich in WDM- Systemen mit den Merkmalen: eine Einmoden- Faser, holographisch aufspaltende Filter als spektral aufspaltende Elemente, Linsen als abbildende Elemente und eine ferroelektrische Flüssigkristallzelle als Teil von einem SLM.

Das Problem dieser Vorrichtungen liegt in der Notwendigkeit der externen Ansteuerung mit einer Vielzahl elektrischer Steuersignale, die aus den unterschiedlichen Intensitäten der Kanäle des Lichtsignals abgeleitet werden müssen, und erheblichen Aufwand verursacht.

Aufgabe der Erfindung ist es, solche Probleme zu vermeiden.

Diese Aufgabe wird mit dem im Kennzeichen des Patentanspruchs 1 dargelegten Verfahren und der im Kennzeichen des Patentanspruchs 2 aufgeführten Vorrichtung gelöst.

Vorteilhafte Weiterbildungsmöglichkeiten sind aus den Kennzeichen der unteransprüche 3 und 4 ersichtlich.

Die Erfindung wird anhand der nachfolgenden Ausführungsbeispiele näher erläutert. In den zugehörigen Zeichnungen zeigen die:
Fig. 1 die nichtlineare Charakteristik eines OASLMs,
Fig. 2 eine Vorrichtung mit einem OASLM zwischen abbildenden Gittern, und
Fig. 3 eine Vorrichtung mit einem OASLM zwischen Fasergittern mit anamorphotischen Linsen.

Optisch adressierbare Lichtventile (OASLM) sind z. B. aus "Spatial Light Modulators; OSA - Technical Digest, ISBN 1-55752-494-7 Washington 1997" bekannt und bestehen aus einer photoleitenden Schicht und einer elektrooptischen Schicht, die spannungsempfindlich ist. Bei lokaler Belichtung bricht die Spannung im Photoleiter lokal zusammen und überträgt sich auf die elektrooptische Schicht, die dadurch lokal in ihrer Durchlaß- oder Reflexionscharakteristik geändert wird und die Belichtung nun ihrerseits optisch anzeigt. Die photoleitende Schicht muß natürlich für die auffallende Belichtung empfindlich sein; die elektrooptische Schicht ist z. B. ein Flüssigkristall, der in weiten spektralen Bereichen optische Modulatoreigenschaften besitzt. Gewisse Materialien vereinen die Eigenschaften der photonenempfindlichen und der spannungsempfindlichen Schicht wie z. B. die photorefraktiven Kristalle oder Polymere. Die Schichten können strukturiert und in einzelne optische Punkte (Pixel) aufgelöst sein, um das übersprechen zwischen nahen Bildpunkten zu vermindern oder um bildpunktweise zusätzlichen elektrischen Eingriff in den Modulator zu erhalten.

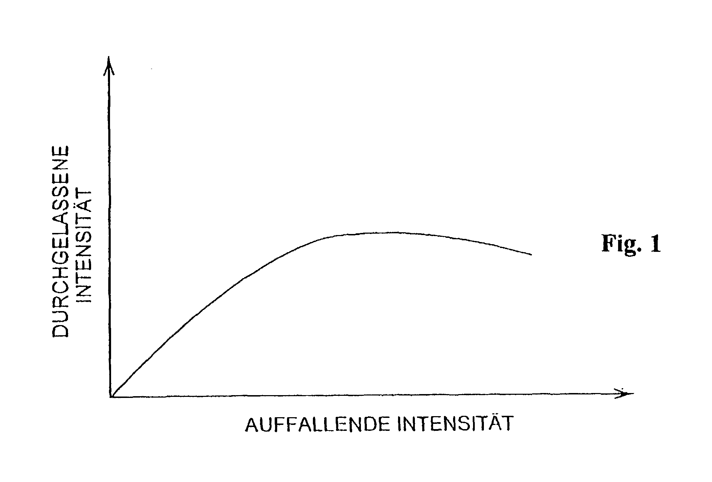

Gewisse Flüssigkristalle in OASLMs haben die Eigenschaft nichtlinear zu sein, d. h., ihre Modulationseigenschaften für das Licht hängen in nichtlinearer Weise von der angelegten Spannung und damit von der Beleuchtungsintensität I auf dem Photoleiter ab. Eine typische Charakteristik einer Vorrichtung zur lokalen Abschwächung der Lichtintensität entsprechend DPA 196 16 323.4 zeigt Fig. 1. Das dort beschriebene Element ist zur Abschwächung starker Lichtquellen im Sichtbaren zum Schutz des Auges oder vor Videokameras entwickelt worden.

Zunächst von L. Wang et al. "Design of an optically adressed spatial light modulator sensitive to 1,55*µ* - write light"; in OSA Technical Digest Vol.9 (1995) p. 89 und neuerdings von mehreren Autoren sind in "Spatial Light Modulators; OSA - Technical Digest, ISBN 1-55752-494-7 Washington 1997 " p.81 uns p. 84 photoleitende Schichten für das dritte optische Fenster bei 1550 nm für den Einsatz in OASLMs vorgeschlagen worden, so daß die Anwendung als optischer Begrenzer für den WDM Vielkanalbetrieb in Frage kommt.

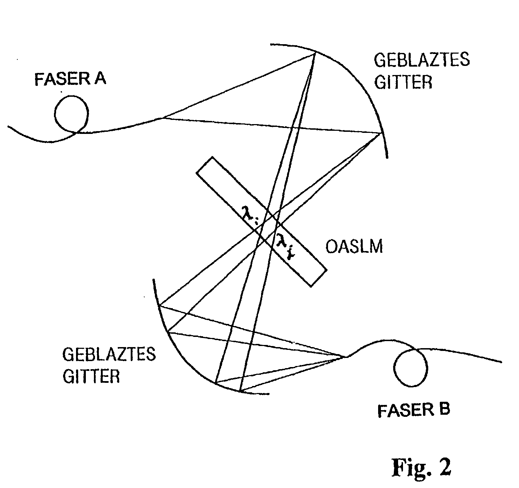

Wie aus Fig. 2 ersichtlich ist, wird ein OASLM, der für das IR Licht der optischen Nachrichtenübertragung empfindlich ist, gemäß der Erfindung so in eine Glasfaserstrecke mit WDM eingebaut, daß er die Intensität der spektralen WDM Kanäle nivelliert. Dazu wird das Licht aus der Faser A spektral aufgespalten und auf den OASLM projiziert, so daß die spektralen Kanäle örtlich voneinander getrennt abgebildet werden. Der nichtlineare OASLM schwächt die sehr intensiven Kanäle überproportional und bewirkt die Intensitätsnivellierung. Anschließend werden die WDM Kanäle wieder zusammen auf einen Punkt abgebildet und in eine weitere Faser B eingekoppelt. Zur spektralen Aufspaltung der WDM Kanäle können alle Arten von Spektralapparaten dienen z. B. Prismen, Gitter oder Interferometer.

Je nach Art des Spektralapparates muß auch die Abbildungsoptik gewählt werden. In Fig. 2 werden bevorzugt gewölbte holographische Gitter gewählt, die sowohl spektral aufspaltende als auch abbildende Eigenschaften haben.

Die Zusammenführung der spektralen Kanäle zum Wiedereinkoppeln in die Faser B kann auch durch eine Linse erfolgen, wenn die Apparaturbedingungen eingehalten werden können. Dabei kommt es auf die Zahl und die Aufspaltung der einzelnen WDM Kanäle an.

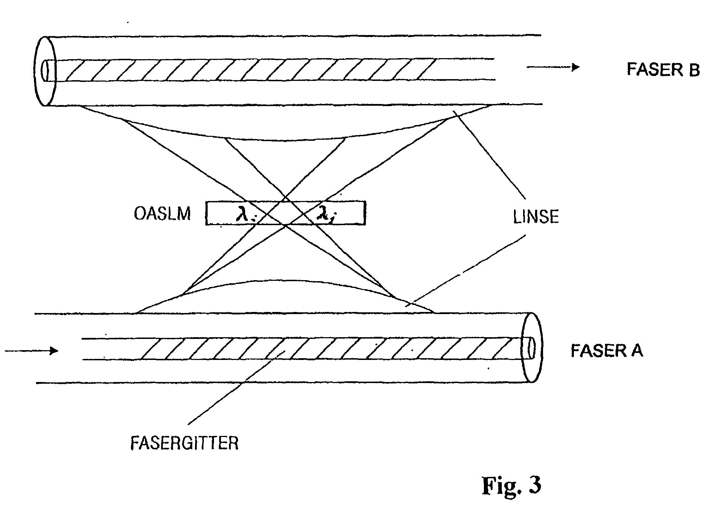

Entsprechend Fig. 3 können auch Auskoppel- und Einkoppelgitter verwendet werden, die direkt in die Faser eingeschrieben werden können und die unter Umständen mit geeigneten Linsen auf der Faser selbst kombiniert werden.

## Patentansprüche

1. Verfahren zum spektralen Pegelabgleich in WDM Vielkanalsystemen unter Verwendung selektiver Lichtabschwächer, in die Licht aus einer Faser über spektral aufspaltende und abbildende Elemente projiziert wird, **dadurch gekennzeichnet, daß**
- das Licht aus der Faser nach spektraler Aufspaltung in Kanäle örtlich getrennt auf die Oberfläche eines optischen Begrenzers auf der Basis eines optisch adressierbaren Lichtventils, OASLM, projiziert wird,
- daß darin die Kanäle mit gegenüber anderen Kanälen höherem Pegel mehr als die anderen Kanäle geschwächt werden, indem die nichtlineare Transmissionscharakteristik des optisch adressierbaren Lichtventils, OASLM, zur Nivellierung der WDM Kanäle ausgenutzt wird, und
- daß zuletzt die Kanäle wieder auf einen Punkt abgebildet und in eine weitere Faser eingekoppelt werden.

2. Vorrichtung zum spektralen Pegelabgleich in WDM Vielkanalsystemen, welche, unter Verwendung selektiver Lichtabschwächer, das Licht aus einer Faser über spektral aufspaltende und abbildende Elemente in eine weitere Faser projiziert,
**dadurch gekennzeichnet, daß**
sie aus in bzw. an eine Faser (A) ein- bzw. angebauten spektral aufspaltenden Elementen, einem selektiven Lichtabschwächer auf der Basis eines optisch adressierbaren Lichtventils, OASLM, und einer weiteren Faser (B) mit ebenso ein-bzw. angebauten spektral aufspaltenden Elementen besteht, wobei das optisch adressierbare Licht ventil auf der Projektions fläche Zwischen den Spektral aufspaltenden und abbildenden Elementen angeordnet ist, so dass darin die örtlich getrennten Spektralen Kanäle mit gegenüber anderen Kanälen höherem Pegel mehr als die anderen Kanäle geschwächt werden, in dem die nichtlineare Transmissionscharakteristik des optisch adressierbaren Licht ventils zum Pegelausgleich ausgenutzt ist.

3. Vorrichtung nach Anspruch 2 **dadurch gekennzeichnet, daß** als an die Fasern (A;B) angebaute, spektral aufspaltende und abbildende Elemente gewölbte Gitter angeordnet sind.

4. Vorrichtung nach Anspruch 2 **dadurch gekennzeichnet, daß** die in die Fasern (A;B) eingebauten, spektral aufspaltenden Elemente Fasergitter sind, die mit anamorphotischen Linsen auf der Faser zur Abbildung ausgestattet sind.

## Claims

1. Process for spectral level balancing in WDM multi-channel systems using selective light attenuators, light from a fibre being projected into said light attenuators via spectrally splitting and imaging elements,
**characterized in that**
- the light from the fibre is first spectrally split into channels and is locally separately projected onto the surface of an optical limiter on the basis of an optically addressable spatial light modulator (OASLM),
- therein the channels with a higher level than other channels are attenuated more than the other channels **in that** the nonlinear transmission characteristic of the optically addressable spatial light modulator (OASLM) is used to level the WDM channels, and
- finally the channels are again imaged onto a point and are coupled into a further fibre.

2. Device for spectral level balancing in WDM multi-channel systems, wherein said device, using selective light attenuators, projects the light from a fibre via spectrally splitting and imaging elements into a further fibre,
**characterized in that**
said device consists of spectrally splitting elements built into or onto a fibre (A), of a selective light attenuator on the basis of an optically addressable spatial light modulator (OASLM) and of a further fibre (B) with likewise built-in or -on spectrally splitting elements, the optically addressable spatial light modulator being disposed on the projection surface between the spectrally splitting and imaging elements, with the result that therein the locally separated spectral channels with a higher level than other channels are attenuated more than the other channels **in that** the nonlinear transmission characteristic of the optically addressable spatial light modulator is used for channel levelling.

3. Device according to claim 2, **characterized in that** convex gratings are disposed as spectrally splitting and imaging elements built onto the fibres (A; B).

4. Device according to claim 2, **characterized in that** the spectrally splitting elements built into the fibres (A; B) are fibre gratings provided with anamorphotic lenses on the fibre for imaging.

## Revendications

1. Procédé d'équilibrage spectral sur des systèmes WDM multicanaux par utilisation d'affaiblisseurs de lumière sélectifs dans lesquels est projetée la lumière d'une fibre par le biais d'éléments de séparation spectrale et de projection,
**caractérisé en ce que**
- la lumière de la fibre est projetée après séparation spectrale dans des canaux géographiquement séparés sur la surface d'un limiteur optique sur la base d'un modulateur spatial de lumière adressé optiquement (OASLM),
- dans ce procédé, les canaux ayant un niveau supérieur à celui des autres canaux sont affaiblis davantage que les autres canaux par utilisation de la caractéristique de transmission non linéaire du modulateur spatial de lumière adressé optiquement (OASLM) pour niveler les canaux WDM et
- les canaux sont finalement à nouveau projetés en un point et réunis dans une autre fibre.

2. Dispositif d'équilibrage spectral sur des systèmes WDM multicanaux qui, par utilisation d'affaiblisseurs de lumière sélectifs, projette la lumière d'une fibre dans une autre fibre par le biais d'éléments de séparation spectrale et de projection, **caractérisé en ce qu'**il est constitué d'éléments de séparation spectrale montés sur ou dans une fibre (A), d'un affaiblisseur de lumière sélectif sur la base d'un modulateur spatial de lumière adressé optiquement (OASLM) et d'une autre fibre (B) sur ou dans laquelle sont également montés des éléments à séparation spectrale, le modulateur spatial de lumière adressé optiquement étant disposé sur la surface de projection entre les éléments à division spectrale et les éléments de projection, de telle manière que les canaux spectraux géographiquement séparés ayant un niveau supérieur à celui des autres canaux sont affaiblis davantage que les autres canaux en utilisant la caractéristique de transmission non linéaire du modulateur spatial de lumière adressé optiquement pour effectuer l'équilibrage.

3. Dispositif selon la revendication 2, **caractérisé en ce que** des grilles convexes sont disposées comme éléments de séparation spectrale et de projection et montés sur les fibres (A; B).

4. Dispositif selon la revendication 2, **caractérisé en ce que** les éléments de séparation spectrale montés dans les fibres (A;B) sont des grilles de fibres équipées sur la fibre de lentilles anamorphiques pour la projection.
